Europäisches Patentamt

European Patent Office

Office européen des brevets

(11) Veröffentlichungsnummer: **0 208 068**
**A2**

(12) **EUROPÄISCHE PATENTANMELDUNG**

(21) Anmeldenummer: 86105308.0

(22) Anmeldetag: **17.04.86**

(51) Int. Cl.⁴: **G11B 15/29**

(30) Priorität: **06.07.85 DE 3524245**

(43) Veröffentlichungstag der Anmeldung:
**14.01.87 Patentblatt 87/03**

(84) Benannte Vertragsstaaten:
**CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Bratenstein, Ernst**
**Taubenweg 26**
**D-8510 Fürth(DE)**
Erfinder: **Gärtner, Friedrich**
**Zoppoter Strasse 67**
**D-8510 Fürth(DE)**

(54) **Vorrichtung zur Betätigung einer Bandandruckrolle in einem Video-Magnetbandgerät.**

(57) Die Vorrichtung zur Betätigung einer Bandandruckrolle in einem Video-Magnetbandgerät gemäß dem Hauptpatent ... (Patentanmeldung P 35 17 738.1) soll so ausgestaltet werden, daß die Druckfeder zum Andrücken der Andruckrolle an die Capstan-Welle die Beweglichkeit des verwendeten Kniegelenks nicht behindert. Dies wird dadurch erreicht, daß sich die Druckfeder, die zwischen einer Schubstange des Kniegelenks und dem Gabelhebel für die Andruckrolle eingesetzt ist, in der Ausgangslage des Kniegelenks mit von der Capstan-Welle abgehobener Andruckrolle unter Vorspannung beidseitig an der Schubstange abstützt, und daß die Anlagestelle der Druckfeder an der Seite des Gabelhebels erst bei Anlage der Andruckrolle an die Capstan-Welle von der Schubstange auf den Gabelhebel übergeht und die Druckfeder sich bei durchgedrücktem Kniegelenk voll auf diesem abstützt.

FIG.1

# VORRICHTUNG ZUR BETÄTIGUNG EINER BANDANDRUCKROLLE IN EINEM VIDEO-MAGNETBANDGERÄT

Die Erfindung bezieht sich auf eine Vorrichtung zur Betätigung einer Bandandruckrolle in einem Video-Magnetbandgerät gemäß dem Oberbegriff des Patentanspruchs 1.

Eine solche Vorrichtung ist bereits im Hauptpatent ... (Patentanmeldung P 35 17 738.1), insbesondere den dortigen Ansprüchen 1 und 5, beschrieben.

Bei der im Hauptpatent ... (Patentanmeldung P 35 17 738.1) beschriebenen Vorrichtung zur Betätigung einer Bandandruckrolle in einem Video-Magnetbandgerät kommt für das Anschwenken der Andruckrolle an die Capstan-Welle ein Steuerschieber in Eingriff zu einem ringförmigen Träger für den Fädelvorgang des Magnetbandes um die Kopftrommel. Während einer gesteuerten Teildrehung des Trägers wird der Steuerschieber von diesem mitgenommen. Diese Schwenkbewegung wird über einen Verbindungshebel auf ein Kniegelenk übertragen und hierdurch wird weiterhin ein die Andruckrolle tragender Gabelhebel mit dieser an die Capstan-Welle angedrückt. Durch eine entsprechende Ausbildung des Eingriffs zwischen Verbindungshebel und Kniegelenk wird nach Anlage der Andruckrolle an die Capstan-Welle ein erheblicher Druck mittels des eingesetzten Kniegelenks auf die Andruckrolle ausgeübt. Nach Anlage der Andruckrolle an die Capstan-Welle wird die Hebelanordnung durch einen vom ringförmigen Träger gesteuerten Sperrschieber derart gesperrt, daß der Steuerhebel und der Sperrschieber weitgehend druckfrei an den ringförmigen Träger anliegen. Das Kniegelenk weist eine eingesetzte Druckfeder auf, die sich an einer dem Kniegelenk gegenüberliegenden Anlagestelle am Gabelhebel abstützt.

Der Erfindung liegt die Aufgabe zugrunde, die eingangs geschilderte Vorrichtung derart zu gestalten, daß die Druckfeder zum Andrücken der Andruckrolle an die Capstan-Welle die Beweglichkeit des Kniegelenks nicht behindert.

Diese Aufgabe wird erfindungsgemäß durch die im kennzeichnenden Teil des Patentanspruchs 1 angegebenen Maßnahmen gelöst.

Vorteilhafte Ausgestaltungen der erfindungsgemäßen Andruckvorrichtung ergeben sich aus den Unteransprüchen 2 bis 4.

Ein Ausführungsbeispiel der erfindungsgemäßen Vorrichtung ist in der Zeichnung näher erläutert. Es zeigen:

Fig. 1 eine schematische Draufsicht auf eine Bandandruckrolle mit Andruckvorrichtung in Ausgangsstellung und

Fig. 2 eine schematische Draufsicht ähnlich der Figur 1, jedoch die Andruckvorrichtung in Betriebsstellung im Teilschnitt.

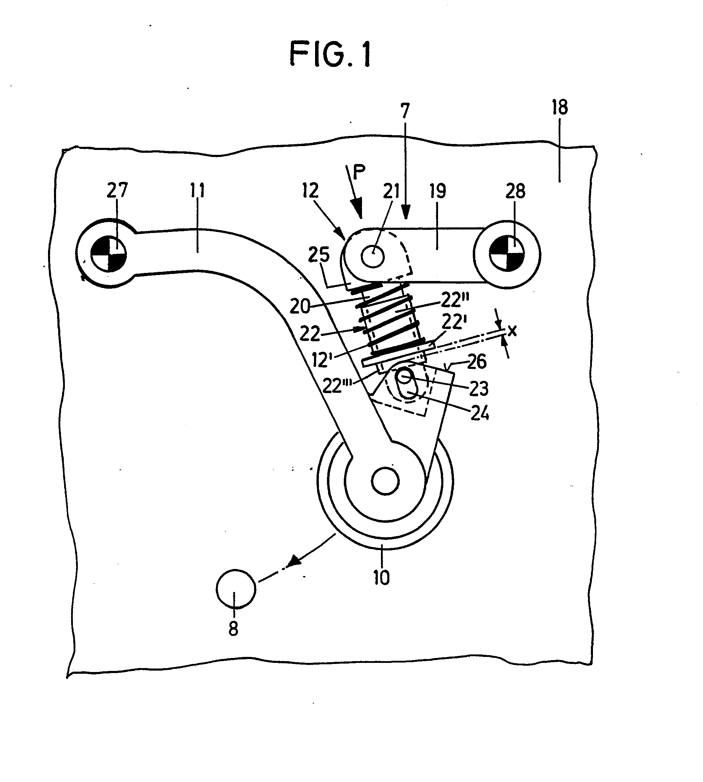

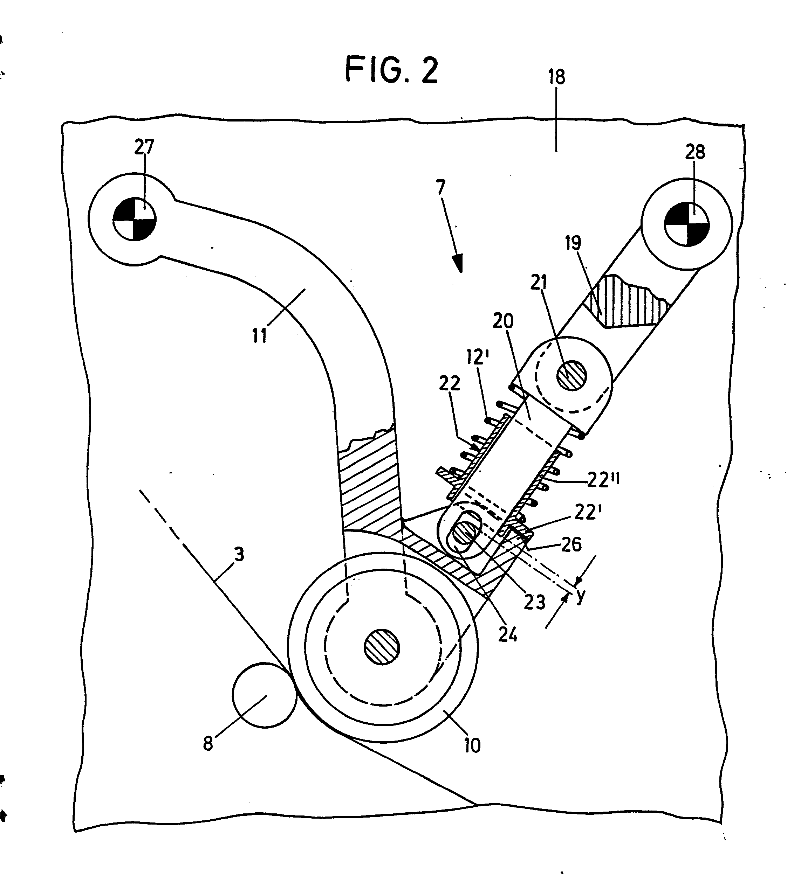

Figur 1 zeigt in schematischer Draufsicht die wesentlichsten Teile der Andruckvorrichtung für die Bandandruckrolle entsprechend Figur 2 des Hauptpatents. Demgemäß wird der Gabelhebel 11 mit der Andruckrolle 10 über eine entsprechende Bewegung des Kniegelenks 12 mittels einer Kraft P in Richtung Capstan-Welle 8 geschwenkt.

Das Kniegelenk 12 besteht im wesentlichen aus dem Gelenkhebel 19, der im Gerätechassis 18 drehbar gelagert ist, und der Schubstange 20. Die Schubstange 20 und der Gelenkhebel 19 sind über eine Achse 21 verbunden. Die Achse 21 wird dabei durch einen nicht näher dargestellten Steuerhebel erfaßt und verschwenkt. Auf der Schubstange 20 ist eine Druckfeder 12' und ein Druckelement aufgeschoben. Das Druckelement ist in der dargestellten Zeichnung als Führungshülse 22 ausgebildet. Die auf der Schubstange 20 aufgeschobene Führungshülse 22 weist einen Flansch 22' und beidseitig angebrachte Hülsenteile 22'' und 22''' auf. Die Schubstange 20 ist über eine Achse 23 mit dem Gabelhebel 11 schwenkbar verbunden. Die Achse 23 ist hierbei in einer Bohrung der Schubstange 20 eingepreßt und in einem Langloch 24 des Gabelhebels 11 verschiebbar geführt.

Die Feder 12' in der nach Figur 1 dargestellten Ausgangsstellung des Kniegelenks 12 stützt sich unter Vorspannung beidseitig an der Schubstange 20 ab. In der Figur 1 stützt sich die Feder 12' dabei einerseits an einem Lagerauge 25 der Schubstange 20 und andererseits am Flansch 22' der Führungshülse 22 ab, wobei sich die Hülse 22 wiederum auf der Achse 23 abstützt. Hierdurch ist gewährleistet, daß sich die Gelenkteile durch den sich ergebenden Abstand x zwischen Gabelhebel 11 und Flansch 22' der Führungshülse 22 druckfrei und ohne unerwünschte Reibung bewegen lassen.

Erst beim Spannen des Kniegelenks 12, was in der vergrößerten Figur 2 näher dargestellt ist, wird die Anlagestelle der Führungshülse 22 von der Achse 23 auf die Anlagefläche 26 des Gabelhebels 11 übertragen. Dies ist möglich, da sich die Achse 23 im Langloch 24 in Richtung Gummiandruckrolle 10 verschieben läßt, wie aus dem Abstand y in der Figur 2 ersichtlich ist. Hiermit wird die Federkraft voll auf den Gabelhebel 11 bzw. die Gummiandruckrolle 10 und das zwischen Gummiandruckrolle 10 und Capstan-Welle 8 befindliche Magnetband 3 übertragen.

In den Figuren 1 und 2 bezeichnen die Zahlen 27 und 28 feststehende Achsen auf dem Gerätechassis 18 für den Gabelhebel 11 bzw. das Kniegelenk 12.

Das Druckelement der vorstehend beschriebenen Andruckvorrichtung kann auch in vorteilhafter Weise als Bügel ausgebildet sein, auf den sich einerseits die Druckfeder abstützt und der sich andererseits mit beidseitig abgebogenen Bügelenden, die prismatische Ausklinkungen aufweisen, weitgehendst reibungsfrei an der Achse 22 abstützt.

## Ansprüche

1. Vorrichtung zur Betätigung einer Bandandruckrolle in einem Video-Magnetbandgerät, das eine drehbare Kopftrommel mit zugeordneten Magnetköpfen aufweist, wobei das Magnetband mittels Bandführungselementen aus einer Bandkassette herausgezogen in Schrägspurführung teilweise um die Kopftrommel gelegt wird, und die Bandführungselemente auf wenigstens einem drehbaren, die Kopftrommel umgebenden ringförmigen Träger angeordnet sind, wobei in den Träger eine Hebelanordnung (7) derart eingreift, daß durch eine gesteuerte Teildrehung des ringförmigen Trägers das Magnetband nur zur Anlage an eine Capstan-Welle (8) mittels einer Bandführungsrolle aus der Kassette herausgezogen und gleichzeitig die Andruckrolle (10) an die Capstan-Welle (8) angeschwenkt und in dieser Lage gesperrt wird und wobei die Hebelanordnung (7) aus einem Gabelhebel (11) mit Andruckrolle (10) und Kniegelenk (12) mit Schubstange (20) und Druckfeder (12'), einem Steuerhebel, einem Bandführungshebel sowie zweier Verbindungshebel und einem Sperrschieber besteht, nach Patent ... (Patentanmeldung P 35 17 738.1), **dadurch gekennzeichnet,** daß sich die Druckfeder (12'), die zwischen der Schubstange (20) des Kniegelenks (12) und dem Gabelhebel (11) für die Andruckrolle (10) eingesetzt ist, in der Ausgangslage des Kniegelenks (12) mit von der Capstan-Welle (8) abgehobener Andruckrolle (10) unter Vorspannung beidseitig an der Schubstange (20) abstützt, und daß die Anlagestelle der Druckfeder (12') an der Seite des Gabelhebels (11) erst bei Anlage der Andruckrolle (10) an die Capstan-Welle (8) von der Schubstange (20) auf den Gabelhebel (11) übergeht und die Druckfeder (12') sich bei durchgedrücktem Kniegelenk (12) voll auf dem Gabelhebel (11) abstützt.

2. Vorrichtung nach Anspruch 1, **dadurch gekennzeichnet,** daß die Druckfeder (12') in der Ausgangslage des Kniegelenks (12) an der Seite des Gabelhebels (11) über ein Druckelement an der die Schubstange (20) und den Gabelhebel (11) schwenkbar verbindenden Achse (23) anliegt.

3. Vorrichtung nach Anspruch 1, **dadurch gekennzeichnet** , daß das Druckelement als eine Führungshülse (22) mit einem Flansch (22') und beidseitig angebrachten Hülsenteilen (22", 22'") ausgebildet ist.

4. Vorrichtung nach Anspruch 3, **dadurch gekennzeichnet,** daß die Achse (23) in die Schubstange (20) eingedrückt ist und in einem Langloch (24) des Gabelhebels (11) gleitet.

# FIG. 1

# FIG. 2